# EUROPEAN PATENT APPLICATION

(11) **EP 4 797 148 A1**
(43) Date of publication of application: **26.08.2026**
(21) Application number: 26160020.9
(22) Date of filing: 23.02.2026
(51) Int. Cl.: G06F 40/30, G06F 40/35, G06F 40/56

(54) **NODE TRAVERSAL GUARDRAILS FOR REAL-TIME AGENTIC MULTI-TURN CONVERSATIONS**

(30) Priority: 24.02.2025 US 202519061896
(71) Applicant: Capital One Services, LLC, McLean, Virginia 22102 (US)
(72) Inventor: GARREPALLI, Suman, McLean, VA 22102 (US); LY, Paul, McLean, VA 22102 (US); VENKATASUBRAMANIAM, Muralikumar, McLean, VA 22102 (US); ZHOU, Bin, McLean, VA 22102 (US); REPAKA, Vikramaditya, McLean, VA 22102 (US); LIN, Daoying, McLean, VA 22102 (US); IJAZ, Hamed, McLean, VA 22102 (US); SHRIVASTAVA, Shreyas, McLean, VA 22102 (US); MABAYOJE, Olamilekan, McLean, VA 22102 (US)
(74) Representative: Boult Wade Tennant LLP

(57) **Abstract**

A method and related system may establish communication guardrails during multi-turn conversations. The method may include constructing a graph indicating a set of intents and a set of intent states by inputting a set of transcripts to a language model and determining a set of metrics of events by traversing a path through nodes of the graph based on intent states indicated by the graph.

## Description

### SUMMARY

Agentic systems use language models to create adaptive AI interactions. These computational models use neural network architectures to understand input and generate contextually relevant outputs. Transformer-based models improve dynamic dialogue management by tracking context and interpreting semantics. By applying probabilistic inference and deep learning techniques, these systems produce coherent responses across various communication scenarios. However, language models may generate responses that appear authoritative while introducing biases, hallucinations, or fabricated information.

Assessing language model behavior presents a complex challenge due to the opacity of large neural networks. Furthermore, evaluating language models across multiple conversational turns becomes challenging due to the dynamic nature of context accumulation, where models may maintain coherence, relevance, and consistency while adapting to evolving user intent. Complex linguistic nuances that are not easily captured by single-turn metrics or traditional benchmarking techniques may create challenges for language model evaluation systems.

Some embodiments may resolve such issues and other issues by establishing and updating language models based on guardrails associated with model-derived conversation states across nodes. Some embodiments may begin by constructing a graph indicating a set of intents and a set of intent states by providing, as inputs, a set of transcripts of a set of multi-turn conversations between a user and a model-based agent to a language model. Additionally, some embodiments may determine a metric of events by traversing a path through nodes of the graph based on the set of intent states and a set of API requests effectuated during at least one conversation of the set of multi-turn conversations. Furthermore, some embodiments may determine a result indicating whether the metric of events satisfies a set of criteria comprising one or more thresholds. Finally, some embodiments may push, to a client-facing application, a set of parameters for the model-based agent based on the result indicating whether the metric of events satisfies the set of criteria.

By performing operations and using related devices described in this disclosure, some embodiments may determine metrics used for evaluating a natural language model and use these metrics as guardrails to trigger additional model updates. Alternatively, or additionally, some embodiments may use results based on these metrics to determine whether to deploy a language model or otherwise push parameters characterizing the language model to a client device, a production server, or another test server.

Various other aspects, features, and advantages of the invention will be apparent through the detailed description of the invention and the drawings attached hereto. It is also to be understood that both the foregoing general description and the following detailed description are examples and are not restrictive of the scope of the invention.

### BRIEF DESCRIPTION OF THE DRAWINGS

FIG. 1 shows an example system for establishing communication guardrails for multi-turn conversations with agentic systems, in accordance with one or more embodiments.
FIG. 2 shows an example conceptual architecture for establishing communication guardrails for multi-turn conversations with agentic systems, in accordance with one or more embodiments.
FIG. 3 shows a flowchart of a process for establishing communication guardrails for multi-turn conversations with agentic systems, in accordance with one or more embodiments.

The technologies described herein will become more apparent to those skilled in the art by studying the detailed description in conjunction with the drawings. Embodiments of implementations describing aspects of the invention are illustrated by way of example, and the same references can indicate similar elements. While the drawings depict various implementations for the purpose of illustration, those skilled in the art will recognize that alternative implementations can be employed without departing from the principles of the present technologies. Accordingly, while specific implementations are shown in the drawings, the technology is amenable to various modifications.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

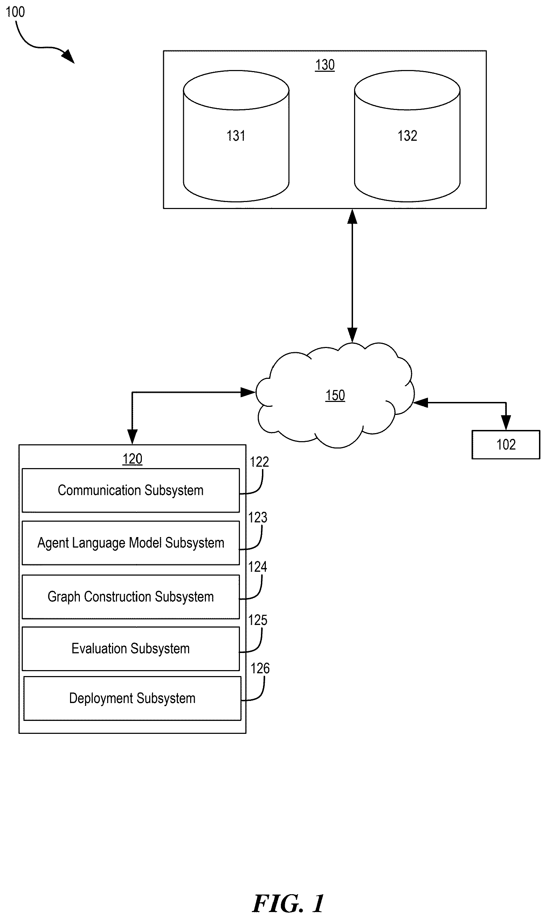

FIG. 1 shows an example system 100 for reducing hallucinatory text generation by establishing communication guardrails during multi-turn conversations by tracking model-derived conversation states across nodes, in accordance with one or more embodiments. A system 100 includes a client device 102 in communication with a server 120 via a network 150. As will be described further in this disclosure, the server 120 may perform operations to increase the likelihood that established communication guardrails will be followed during multi-turn conversations.

In some embodiments, the system 100 may reduce hallucinatory text generation by establishing communication guardrails for API calls during multi-turn conversations by tracking model-derived conversation states across nodes. Some embodiments may construct a graph indicating a set of intents and a set of intent states by providing, as inputs, a set of transcripts of a set of multi-turn conversations between a user and a model-based agent to a language model. For example, some embodiments may process a transcript to identify and categorize the intents expressed during the conversation, such as identifying a user's intent to inquire about the weather and the agent's response providing the weather forecast. Some embodiments may determine a metric of events by traversing a path through nodes of the graph based on the set of intent states and a set of API requests effectuated during at least one conversation of the set of multi-turn conversations. For example, some embodiments may track which intents were added, which associated intent-related values changed between nodes of a graph, and which API requests were called at each turn of a conversation represented by one or more graph nodes. By generating such a graph, some embodiments may convert unstructured text data into structured data for which intents may be tracked, permitting a system to establish boundaries of acceptable and unacceptable API calls or other instructions for execution. Some embodiments may then deploy or re-train a model based on this structured data.

Some embodiments may establish guardrails during a multi-turn conversation by constructing a graph based on and determining a metric of out-of-intent request events by traversing the graph to detect changes based on the intents, intent states, and API requests effectuated during the multi-turn conversation. Some embodiments may determine a result indicating whether the metric of events satisfies a set of criteria comprising one or more thresholds. For example, some embodiments may analyze the transitions between nodes to identify whether an API request aligns with the expected intents and states and then determine if the metric of events meets the predefined thresholds. Some embodiments may then push, to a client-facing application, a set of parameters for the model-based agent based on the result indicating whether the metric of events satisfies the set of criteria. For example, some embodiments may deploy a language model or an update to the language model from a testing environment into a production environment if the metric of events satisfies the maximum violation threshold.

The client device 102 may include one of various types of computer devices usable as a client-side device, such as a laptop, data terminal, mobile computing device, etc. The client device 102 may send requests, responses, or other messages to the server 120 that may require communication with other computing devices or other electronic devices. Additionally, the server 120 may include various types of computing units, such as physically separate servers, virtual nodes hosted on one or more physical machines, or nodes on a cloud computing system. Applications, services, or other operations may use data provided by the client device 102, the server 120, or a set of databases 130 that includes a first networked database 131 and a second networked database 132. The set of databases 130 may include various types of databases, such as SQL databases, no SQL databases, graph databases, etc. In some embodiments, the server 120 may perform one or more operations related to a communication subsystem 122, an agent language model subsystem 123, a graph construction subsystem 124, an evaluation subsystem 125, or a deployment subsystem 126.

In some embodiments, the communication subsystem 122 may obtain program instructions, commands, parameters, values, or other data from the client device 102, the set of databases 130. For example, the communication subsystem 122 may retrieve a set of parameters from the set of databases 130. Furthermore, operations performed by the server 120 may use the communication subsystem 122 to send messages to the set of databases 130, the client device 102, or another computing device described in this disclosure. Furthermore, some embodiments may use the communication subsystem 122 to communicate with one or more remote computing devices to offload some or all of the operations described in this disclosure. For example, some embodiments may use the communication subsystem 122 to obtain a transcript of a conversation between a user and a model-based agent or a chat log between the user and the model-based agent.

In some embodiments, the agent language model subsystem 123 may train a language model, use the language to generate responses for a user, and fine-tune model parameters based on feedback related to the responses. In some embodiments, the agent language model subsystem 123 may train a language model by using a large dataset of conversational transcripts to improve its understanding of natural language. For example, the agent language model subsystem 123 might use a dataset containing thousands of customer service interactions to train the model on how to respond to various customer inquiries and when to initiate a multi-turn conversation by following up on a user's input. Additionally, the agent language model subsystem 123 may receive real-time data from ongoing conversations to generate responses for users. For instance, when a user asks, "What is the weather today?", the subsystem can use the language model to provide an accurate weather update. Furthermore, the agent language model subsystem 123 may fine-tune model parameters based on feedback related to the responses. For example, if users frequently indicate that a particular response is unhelpful, the subsystem can adjust the model parameters to improve the quality of future responses.

In some embodiments the graph construction subsystem 124 may construct a transition state graph to indicate the state of a conversation at each turn or part of a turn and the transition between the turns. The transition state graph may indicate a set of intents and associated intent states. The graph construction subsystem 124 may provide, as inputs, a transcript of the multi-turn conversation trained to output intents. The graph construction subsystem 124 may process a transcript to identify and categorize the intents expressed during the conversation after each completion of a new entry (e.g., after each time a user speaks, a user enters another prompt in a chat messaging window, a model-based agent outputs a response, etc.). The graph construction subsystem 124 may then add these intents to corresponding nodes in the graph, each node representing a specific intent and its related states. In some embodiments, the graph may serve as a structured representation of the state of a conversation, capturing the flow and transitions between different intents.

In some embodiments the evaluation subsystem 125 may determine a metric of out-of-intent request events by traversing a path through nodes of the transition state graph. Some embodiments may detect a set of intent state changes based on the set of intents, the associated set of intent states, and a set of API requests effectuated during the multi-turn conversation. For example, the evaluation subsystem 125 may track which intents were added, which associated intent-related values changed between nodes of a graph, and which API requests were called at each turn of a conversation represented by one or more graph nodes. By analyzing these transitions, the subsystem can identify whether the API requests align with the expected intents and states, increasing the likelihood of determining whether a conversation adheres to predefined guardrails and criteria.

In some embodiments the deployment subsystem 126 may deploy or otherwise push a set of parameters to a client-facing application for a model-based agent. In some embodiments, the deployment subsystem 126 may determine whether one or more metrics satisfies a set of criteria associated with deploying a language model or language model update. For example, the deployment subsystem 126 may determine a metric indicating a count of out-of-intent request events. The deployment subsystem 126 may then determine whether this metric satisfies a maximum violation threshold, or another set of criteria. In response to determining that the maximum violation threshold is satisfied (e.g., by being less than or equal to the threshold), some embodiments may deploy a language model or an update to the language model. Various other metrics may include metrics such as a total number of turns, a metric indicating whether an entry intent was detected, a metric on whether a user had made redundant requests for data (indicating that the language model response for the first time was insufficient), a metric on a relevance rate indicating whether a user indicated that a response was relevant or not relevant, a metric indicating a determination of whether the correct extract of data was performed based on a request, a metric indicating a response conciseness metric, a metric indicating whether a correct set of API requests was made, a metric a next intent suggestion rate, a metric indicating a coherence and tone rate, a metric indicating a whether a next predicted intention suggestion was correct, a metric indicating a count of human-driven switches in intent during the multi-turn conversation.

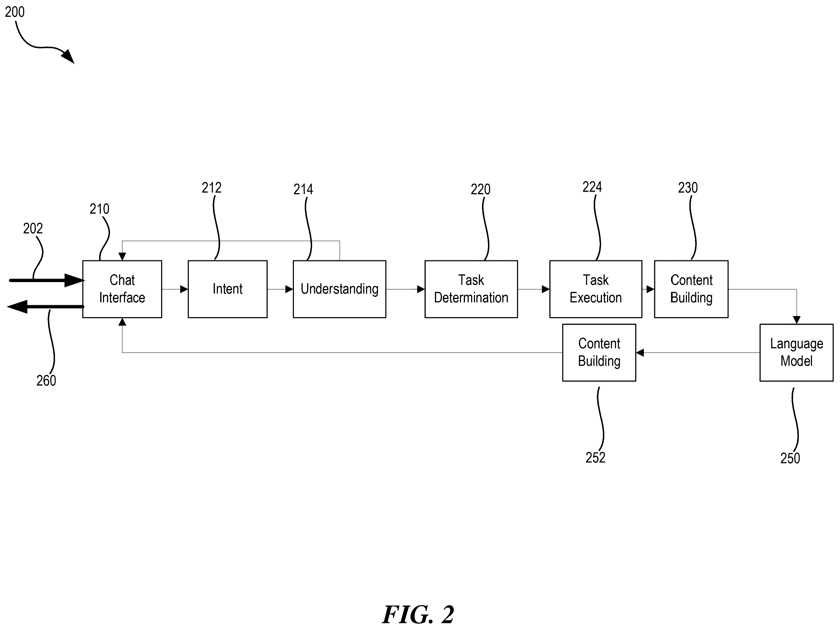

FIG. 2 shows an example conceptual architecture 200 for a model-based agent engaging in conversation with a user, in accordance with one or more embodiments. The conceptual architecture 200 depicts components of a chatbot or used by chatbot. The conceptual architecture 200 indicates that a user input 202 is first received by a chat interface 210. For example, a user might type "What is the weather today?" into the chat interface 210. This input is then sent to an intent module 212 to detect an intent, such as identifying that the user is asking for weather information. The detected intents are then provided to an understanding module 214 to determine the purpose of the question. For instance, the understanding module 214 might determine that the user wants to know the current weather conditions. If the understanding module 214 determines that clarity is needed, it may send instructions to the chat interface 210 to ask a clarifying question, such as "Do you want the weather forecast for today or the entire week?" If no further clarification is needed, the understanding module 214 may send data to a task determination module 220 to determine downstream tasks. The task determination module 220 may then send a set of determined tasks, such as fetching weather data from an API, to a task execution data collection module 224.

The intent module 212 may assign one or more various types of domain-specific intents to a user response. For example, in the context of a vehicle-related purchasing application, the intent module 212 may assign a set of intents that may include a first intent group called "vehicle inquiries" that includes the intents "test drive," "check inventory," and "sales question," a second intent group called "discovery" that includes the intents "features," "capabilities," and "similar vehicles," and a third intent group called "dealer inquires" that includes the intents "FAQ," "General," and "Servicing." Furthermore, the intent module 212 may also assign a fourth group called "enrich" that includes the intents "estimate," "pre-qualify," and "trade-in," where each of these intents may be mapped to or otherwise associated with a respective API call type. For example, the intent "estimate" may be mapped to a first API call type "get_estimate," the intent "pre-qualify" may be mapped to a second API call type "modal_qualify,": and the intent "trade-in" may be mapped to a third API call type "modal_trade."

The task execution data collection module 224 collects the necessary data, such as retrieving weather information from an API, and provides it to a content building module 230. The content building module 230 generates a language model input, such as formatting the weather data into a readable response and sends it to a large language model 250. The large language model 250 processes the input and generates a response, such as "The weather today is sunny with a high of 75°F." This response is then sent to a response handling module 252, which performs post-processing, such as checking for any errors or formatting issues, before sending it to the chat interface 210 for display to the user, where it may be seen as part of a system response 260.

In some embodiments, one or more components of the conceptual architecture 200 may evaluate a multi-turn conversation to determine whether an LLM response is appropriate. For example, the response handling module 252 may evaluate a multi-turn interaction and an associated set of intents constructed with the intent module 212. For example, some embodiments may retrieve a set of permitted API calls to determine whether an API request determined by the task determination module 220 or executed by the task execution data collection module 224 is within the set of permitted API calls.

It should be noted that, in some cases, a permitted API call or other permitted downstream action may be based not on a single intent, but instead on a combination of intents or even a sequence of intents. For example, a user may interact with a chatbot to book a flight and first ask, "What is my total bank account amount?" The intent module 212 may determine an associated first intent "account amount information." The user then follows up with, "Can I transfer all of my money to an account XYZ?" This second intent may include "make transfer." The system may include, as part of a set of permitted API calls, a first call "retrieval" mapped to the first intent, a second call "transfer" mapped to a second intent, and a third call "escalated_authentication" mapped to a sequence of intents across a multi-turn conversation that includes the sequence [["account amount information"],[ "transfer"]]. Some embodiments may then combine these first, second, and third calls to form a set of permitted API calls and evaluate whether an API call selected or executed by the task determination module 220 or the content building module 230 satisfy the set of permitted API calls.

### Flowchart

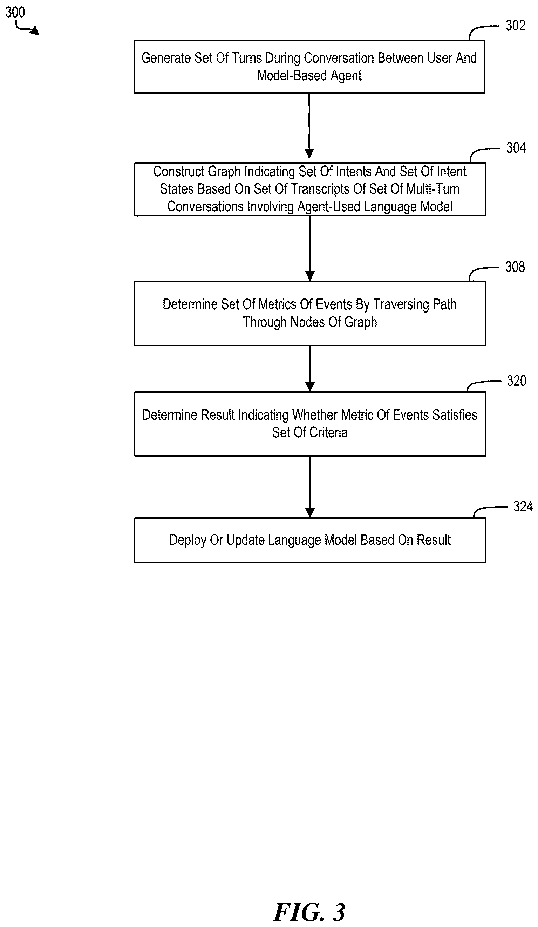

FIG. 3 shows a flowchart of a process 300 for establishing communication guardrails for multi-turn conversations with agentic systems, in accordance with one or more embodiments. Some embodiments may generate a set of turns during a conversation between a user and a model-based agent, as indicated by block 302. Some embodiments may generate a set of agent-generated turns during a multi-turn conversation between a user and a model-based agent by sending user-generated text provided by the user to a first language model. For example, a computer system may generate a multi-turn dialogue sequence by constructing conversational turns through probabilistic language model inference. In some embodiments, an initial user prompt or a follow-up user prompt may trigger a neural network to generate a response based on the prompt, which may then become part of the input context for subsequent turn generation. For example, some embodiments may use a transformer-based neural network model or other language model to process an input by encoding the input prompt into high-dimensional vector representations through multi-head attention mechanisms. These mechanisms may extract complex semantic relationships across tokenized input sequences via their vector representations. The language model may apply learned weight matrices and one or more non-linear activation functions to generate probabilistic distributions over potential next-token sequences, effectively transforming the initial contextual embeddings into a semantically coherent and contextually relevant linguistic response through iterative probabilistic sampling and generation techniques.

Some embodiments may construct a graph indicating a set of intents and a set of intent states based on a set of transcripts of a set of multi-turn conversations involving an agent-used language model, as indicated by block 304. Some embodiments may construct a graph indicating a set of intents and a set of intent states by providing, as inputs, a set of transcripts of a set of multi-turn conversations between a user and a model-based agent to a language mode. When constructing a transition state graph from a conversation, a node of the transition state graph can be described as a collection of intents and related intent states. An intent state may indicate a particular property specific to an intent, an entry condition for the intent that was satisfied, or an exit condition for the intent and whether it is satisfied.

Some embodiments may use another language as a judge to detect intents or tones or to determine whether an associated state or criteria is satisfied. For example, some embodiments may determine a first set of intents based on user interface interactions provided by a client device (e.g., a user clicks on "account help" in a user interface). Additionally, some embodiments may determine a second set of intents by providing the set of transcripts to an evaluation language model. For example, some embodiments may provide the set of transcripts to a transformer-based language model different from the one used to generate the transcripts, where the transformer-based language model may then output a set of intents or intent state values used to update a graph.

Some embodiments may detect patterns based on these intents or other intent-related values to determine a set of metrics and whether the set of metrics satisfies a set of criteria indicating an anomaly or otherwise indicating that a multi-graph conversation is acting within or beyond a set of intended guardrails. Some embodiments may determine a first set of intents or intent-related values (e.g., intent categories) associated with a first node of the graph and a second intent category associated with a second node of the graph. Some embodiments may then determine an intent pattern based on a node path of the graph from the first intent category and the second intent category.

As an example, a conversation between a user and a model-based agent can proceed along four turns, each turn creating a node. In the first turn, the user may ask, "What's the weather like today?" and the agent responds, "The weather today is sunny with a high of 75°F." This creates Node 1 with the intent of a weather inquiry and intent states indicating the user is seeking information about the weather condition, with entry and exit conditions satisfied by the user's question and the agent's response. In the second turn, the user asks, "Will it rain tomorrow?" and the agent responds, "No, it is expected to be clear tomorrow." In response, some embodiments may create a second node with the intent of a weather forecast inquiry and intent states indicating the user is seeking information about rain prediction, with entry and exit conditions satisfied by the user's question and the agent's response. In the third turn, the user asks, "What about the weekend?" and the agent responds, "The weekend will be partly cloudy with a chance of showers." Some embodiments may create a third node having the intent of an extended weather forecast inquiry and intent states indicating the user is seeking information about the weekend weather, with entry and exit conditions satisfied by the user's question and the agent's response. In the fourth turn, the user asks, "Should I carry an umbrella?" and the agent responds, "Yes, it would be wise to carry an umbrella just in case." In response, some embodiments may create a fourth node having the intent of a weather advice inquiry and intent states indicating the user is seeking advice on umbrella usage, with entry and exit conditions satisfied by the user's question and the agent's response. Analyzing the intent-related values of each node from the first turn to the fourth turn shows how each turn in the conversation creates a node with specific intents and intent states, and how these intents and states are analyzed from the first turn to the fourth turn.

Some embodiments may use a shared tenant model for monitoring operations to evaluate a single model from multiple conversations. For example, some embodiments may use a first application to construct a first graph for a first transcript involving a first user and a first model-based agent and then use the same first application to construct a second graph for a second transcript involving a second user and a second model-based agent. Some embodiments may then use the same first application or a different application to traverse both a first path through the first graph and a second path through the second graph. By using the same application to perform analysis for different instances of a language model's outputs, or even different language models entirely, some embodiments may reduce resource consumption in a shared evaluation architecture.

Some embodiments may construct a graph that connects interactions from multiple transcripts and use the combined transcript. For example, some embodiments may retrieve a first transcript and second transcript from a database of transcripts or in real-time during a conversation (e.g., by retrieving the first transcript from a database and generating the second transcript during a live conversation) beginning by generating a first portion of the graph based on the first transcript. Additionally, some embodiments may generate a second portion of the graph based on the second transcript, wherein a state change indicates a transition between the first portion and the second portion. Furthermore, some embodiments may determine the metric of events based on a state change with respect to an intent state (e.g., from being empty to being populated). This process ensures that the metrics used for evaluating the system are based on valid and relevant transitions, providing a reliable foundation for further analysis and decision-making.

Some embodiments may detect one or more patterns based on the linear graph of these nodes, where a pattern or template for a pattern may be stored in a database or other type of data store. For example, some embodiments may detect alternating chains of intents or intent categories across multiple turns of an agentic conversation. For example, some embodiments may detect that a graph indicates that an agentic conversation followed a known pattern of categories of a first node having a first intent associated with an intent category labeled "Discovery," a second node having a second intent associated with an intent category labeled "Enrichment," and a third node having a third intent associated with an intent category labeled "Inquiries." Some embodiments may detect that this pattern matches with a "Discovery-Enrichment-Inquires" pattern found in a list of patterns indicating anomalous language model behavior. Some embodiments may match one or more other patterns with the intents or other values of one or more nodes of a transition state graph generated from multi-turn conversations. Such patterns may include patterns based on a sequence of two or more intent categories, two or more intents, two or more intent-related values (e.g., intent state values indicating intent entry fulfillment or intent exit fulfillment), etc.

Some embodiments may use intent states or other data associated with intents in conjunction with or as an alternative to intents themselves to determine a metric, detect a pattern, or otherwise determine whether a set of criteria is satisfied. Some embodiments may, for a first turn of a multi-turn conversation, construct a first node of the graph by assigning a first intent to the first node and an associated indication of intent entry based on a determination that the first intent was not present in a parent node of the first node. For example, some embodiments may construct a node for the intent "features" and an intent state value indicating that this intent was entered at this node. Some embodiments may then, for a second turn, construct a second node of the graph that is downstream with respect to the first node by determining that an intent criterion of the first intent is satisfied. For example, some embodiments may determine that a list of features was provided to a user and confirmed as sufficient by the user at a second turn and, in response, construct a second node representing this second turn. The second node may indicate that the intent "features" has been satisfied. Furthermore, some embodiments may apply a set of criteria that includes a criterion that certain intents be satisfied (e.g., high-priority intents), a criterion that a certain percentage or number of intents be satisfied, or a criterion that all intents be satisfied before deploying a language model for use (e.g., migrating a model or model update from a test environment to a production environment).

For example, in the context of a vehicle-related purchasing application, the intent module 212 may assign a set of intents that may include a first intent group called "vehicle inquiries" that includes the intents "test drive," "check inventory," and "sales question," a second intent group called "discovery" that includes the intents "features," "capabilities," and "similar vehicles," and a third intent group called "dealer inquiries" that includes the intents "FAQ," "General," and "Servicing." Furthermore, the intent module 212 may also assign a fourth group called "enrich" that includes the intents "estimate," "pre-qualify," and "trade-in," where each of these intents may be mapped to or otherwise associated with a respective API call type. For example, the intent "estimate" may be mapped to a first API call type "get_estimate," the intent "pre-qualify" may be mapped to a second API call type "modal_qualify,": and the intent "trade-in" may be mapped to a third API call type "modal_trade."

As described elsewhere, one or more patterns may be associated with a particular downstream activity, such as pushing parameters for a language model, updating parameters of the language model via additional training operations or hyperparameter updates, etc. For example, some embodiments may detect a first pattern in a new language model's output replies that matches with a first pattern indicating an anomalous response due to a repeat of an intent or an intent category that should not be repeated. In response, some embodiments may initialize a new training operation for the new language model or prevent the deployment of an update that would upgrade a prior version of the language model to the new language model. Alternatively, based on a determination that a set of detected patterns are expected patterns, some embodiments may deploy an update to a language model.

As described elsewhere, some embodiments may use RAG operations to retrieve documents or other additional data as part of a context. Some embodiments may evaluate a language model, or a pre-processing step of a language model based on the documents or additional data that is retrieved. For example, some embodiments may detect a set of keywords or determine a subset of intents based on a set of user-generated text. Following this, some embodiments may retrieve context data from a set of records based on the set of user-generated text by searching for documents or other data related to the set of keywords or determine a subset of intents. Furthermore, some embodiments may determine a metric of events based on a comparison between the set of records and a predicted set of records associated with the subset of intents or keywords. For example, some embodiments may determine that a model component retrieved documents titled "doc1" and "doc2" when the ideal model component should have retrieved documents titled "doc1" and "doc5." Such comparisons can be especially important when the set of retrieved documents is limited by a context window, and so the calibration of a retrieval operation can determine whether more accurate or less accurate information is retrieved. By evaluating a model based on the data it retrieves, some embodiments may then perform a downstream model modification operation and increase the accuracy of a language model using RAG techniques.

Some embodiments may operate a monitoring service in a parallel stack with respect to the model-based agent. For example, some embodiments may receive user-generated text as part of a user-generated conversational turn. This user-generated text is then provided to a model-based agent operating as part of a first stack using a computer system, allowing the model-based agent to process and understand the input. Concurrently, some embodiments may forward the user-generated text to a second application operating on a second stack. This second application may construct the graph and update the graph as the conversation between the model-based agent and the user evolves across multiple turns. Some embodiments may then perform real-time analysis of the conversation based on this constructed graph.

In some embodiments, constructing a graph may involve operations to obtain a representation of intents and intent states. In some embodiments, an intent can be satisfied if its exit conditions are met, where an exit condition can be the user providing a desired information. For example, some embodiments may assign a first intent to a first turn of a multi-turn conversation by updating a first node of the graph associated with the first turn and then retrieve a set of intent exit criteria based on the first intent to also include in association with the first node. Additionally, some embodiments may then determine that the set of intent exit criteria is satisfied based on text from a second turn of the set of multi-turn conversations. For example, some embodiments may determine that a node representing a conversation state includes an intent "get contact information" and has an associated set of intent properties "phone number" and "e-mail address." Some embodiments may determine, based on user-provided data, that the intent is satisfied based on a detection of a phone number or e-mail address in the user-provided data. Some embodiments may apply a criteria that all intents are satisfied or that a subset of intents are satisfied (e.g., intents related to acquiring contact information, intents related to answering a user-provided question, etc.). Some embodiments may then push a set of parameters or perform another downstream operation (e.g., send a message to a user that a version of a language model is ready for deployment) based on a determination that the set of intent exit criteria is satisfied.

Some embodiments may determine a set of metrics of events by traversing a path through nodes of the graph, as indicated by block 308. Some embodiments may determine a metric of events by traversing a path through nodes of the graph based on the set of intent states and a set of API requests effectuated during at least one conversation of the set of multi-turn conversations.

Some embodiments may use API validity with respect to a set of detected intents as a metric to evaluate a language model. For example, some embodiments may determine, for a first node of the graph, whether an API request is valid based on a subset of intents associated with the first node and a set of permissible API requests associated with the subset of intents. For example, some embodiments may determine that a candidate API request (e.g., a request that includes a text sequence indicating the use of an account verification service) was made by an agent in response to a user prompt during a first turn represented by a set of nodes. Some embodiments may then determine whether this request is valid based on whether the candidate API request is one of a set of permitted API request types based on the intents associated with that node. For example, some embodiments may determine whether an API request associated with an account verification service matches with one or more API request types associated with a set of intents for a node representing a conversational state. In response to a determination that the candidate API request matches, some embodiments may determine that the API request is valid. Alternatively, if the candidate API request does not match, some embodiments may determine that the API request is not valid and initiate a retraining operation for the language model or otherwise change a configuration of an agent.

Some embodiments may determine one or more metrics indicating the recitation of duplicative information when evaluating a language model, where such a recitation of duplicative information may weigh against the deployment of the language model or suggest additional modification of the language model. Some embodiments may determine a semantic similarity score by comparing output text in a first turn and output text in the second turn. For example, some embodiments may determine a semantic similarity score between two outputs by encoding them using a pre-trained transformer model to generate dense vector embeddings and then compute their cosine similarity scores. Some embodiments may then determine whether the semantic similarity score satisfies a threshold indicating the presence of duplicative information. In response to determining that the threshold is satisfied, some embodiments may then prevent the deployment of a language model by stopping a scheduled push of a set of parameters characterizing the language model to a production server. Some embodiments may then retrain a language model or otherwise change one or more parameters of the language model to reduce the risk of reciting repeat information.

Some embodiments may determine a result indicating whether a set of metrics of events satisfies a set of criteria, as indicated by block 320. Some embodiments may determine a result indicating whether the metric of events satisfies a set of criteria comprising one or more thresholds. For example, at each turn, some embodiments may determine a set of permitted API requests that is mapped to an intent for that turn or mapped to a combination of intents for that turn. At each turn, some embodiments may then determine that a violation occurs when an API request is made outside of the set of permitted API requests and generate or update a metric to be the total number of violations. Some embodiments may then determine that a set of criteria associated with deploying a model or updating a model is violated if the metric exceeds a violation count threshold.

Some embodiments may use back-end logs of operations to further assess multi-turn conversations. For example, some embodiments may determine one or more metrics may include determining metrics based on log data associated with several steps to ensure the accuracy and relevance of the data. Some embodiments may begin by retrieving a set of application-level logs associated with the model-based agent, where logs may indicate various types of information. For example, a log may indicate API endpoint usage, rate limit-related data, and user-related data. The log may also indicate other information such as system resource utilization (CPU, memory, disk I/O, network bandwidth consumption), response time latency breakdowns (time spent in database queries, external service calls, data processing), error rates and stack traces (with detailed exception information and failure points), garbage collection statistics and memory allocation patterns, thread pool utilization and concurrency metrics, cache hit/miss ratios and eviction rates, database connection pool status and query performance statistics, message queue depths and processing times, session information and user activity patterns, security-related events (authentication attempts, access control violations), dependency health checks and integration points status, custom business metrics (transaction volumes, feature usage patterns), system configuration changes and deployments, and infrastructure-level metrics (container health, auto-scaling events, load balancer statistics). Some embodiments may augment a graph based on these values (e.g., updating data associated with a node based on log values assigned to those nodes) and determine patterns or whether one or more values exceeds an associated threshold. In response to a determination that a particular pattern is detected or a threshold is satisfied, some embodiments may perform a downstream action associated with that particular pattern or threshold (e.g., stopping or starting a deployment of a model).

Additionally, some embodiments may determine the result indicating whether the metric of events satisfies the set of criteria by evaluating whether the set of application-level logs meets the specified criteria. This process ensures that the metrics used for evaluating the system are based on valid and relevant logs, providing a reliable foundation for further analysis and decision-making.

When a metric satisfying or violating a set of criteria results in a retraining operation or other operation to update parameters for a language model, some embodiments may select a specific subset of parameters to update based on which metric violates the set of criteria or a score category corresponding to the metric. For example, some embodiments may select a first subset of parameters that includes an updated learning rate based on a first metric indicating intent inaccuracy being not satisfied. Some embodiments may then push this first subset of parameters to a production model for updating the learning model in the production model based on the first subset of parameters being associated with the first metric or a score category associated with the first metric. For example, some embodiments may deploy the first subset of parameters based on the first subset of parameters indicating intent inaccuracy.

Some embodiments may determine intent satisfaction when seeing that a hyperlink is visited. For example, in some embodiments, a model-based agent may provide, to the user, a set of hyperlinks (e.g., as part of a response to recommend further action by the user or to provide additional information). Some embodiments may receive an indication that the user has visited the set of hyperlinks and, in response, record these one or more indications. Some embodiments may then determine that a set of intents is satisfied based on the one or more indications and that a set of parameters for a language model is ready for deployment. Some embodiments may then push the set of parameters to a production server in response to receiving the one or more indications that the first intent is satisfied.

Some embodiments may deploy or update the language model based on the result, as indicated by block 324. Some embodiments may push, to a client-facing application, a set of parameters (e.g., learned parameters or configuration parameters) for the model-based agent based on the result indicating whether the metric of events satisfies the set of criteria. For example, some embodiments may push a set of parameters from a test environment to a production environment hosting a live version of a language model that is used by one or more client devices. As used in this disclosure, a set of parameters may include learned parameters of a language model (e.g., weights or biases of the neural units of the language model) or configuration parameters, such as training parameters or model architecture parameters.

Some embodiments may push a language model or an update to the language model by transmitting refined model parameters from the development environment to the application's production infrastructure or other infrastructure. For example, some embodiments may train a language model based on one or more detected failures in the metrics applied to multi-turn conversations using the model. Some embodiments may then re-test the trained model to determine that a set of criteria representing checks on guardrail deviation is satisfied. In response to determining that the set of criteria is satisfied, some embodiments may deploy the language model. After receiving the model or the update to the model, client systems or client applications using the model may benefit from the changes to the updated model.

When updating a language model, some embodiments may change different parts of the model parameter based on a determination of which criteria or thresholds are violated. For example, some embodiments may determine a first metric that indicates whether a set of API requests generated during the conversation satisfies a set of permitted API requests and determine a second metric that indicates whether the duplicative info is being provided. Some embodiments may assign a first set of hyperparameters or other model parameters to the first metric and assign a second set of hyperparameters or other model parameters to the second metric. Based on a determination that the first metric violates a first criterion associated with the metric (e.g., generating two API requests that are not in the set of permitted API requests exceeds a threshold equal to one), some embodiments may update the first set of hyperparameters or other model parameters.

The above-described embodiments of the present disclosure are presented for purposes of illustration and not of limitation, and the present disclosure is limited only by the claims which follow. Furthermore, it should be noted that the features and limitations described in any embodiment may be applied to one or more other embodiments herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods. Furthermore, not all operations of a flowchart need to be performed. In addition, the systems and methods described herein may be performed in real time. It should also be noted that the systems and/or methods described above may be applied to, or used in accordance with, other systems and/or methods.

Furthermore, the computing devices described in this disclosure may be any type of computing device unless otherwise stated, including, but not limited to, a laptop computer, a tablet computer, a hand-held computer, and/or other computing equipment (e.g., a server), including "smart," wireless, wearable, and/or mobile devices. For example, while the client device 102 of FIG. 1 may be a laptop device, a smart phone device, or another type of mobile computing device may be possible. Furthermore, the embodiments described in this disclosure may include an individual device that performs some or all the operations described in this disclosure. Alternatively, other embodiments may include multiple computing devices acting collectively to perform some or all the operations described in this disclosure.

As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety (i.e., the entire portion), of a given item (e.g., data) unless the context clearly dictates otherwise. Furthermore, a "set" may refer to a singular form or a plural form, such that a "set of items" may refer to one item or a plurality of items.

In some embodiments, the operations described in this disclosure may be implemented in a set of processing devices (e.g., a digital processor, an analog processor, a digital circuit designed to process information, an analog circuit designed to process information, a state machine, and/or other mechanisms for electronically processing information). The processing devices may include one or more devices executing some or all of the operations of the methods in response to instructions stored electronically on one or more non-transitory, machine-readable media (e.g., a set of machine-readable storage media), such as an electronic storage medium. Furthermore, the use of the term "media" may include a single medium or combination of multiple media, such as a first medium and a second medium. One or more non-transitory machine-readable media storing instructions may include instructions included on a single medium or instructions distributed across multiple media. For example, non-transitory media may act as one or more memories, where one or more memories may store program instructions that are written as source files or written in machine-executable program code. The processing devices may include one or more devices configured through hardware, firmware, and/or software to be specifically designed for the execution of one or more of the operations of the methods.

**In** some embodiments, the various computer systems and subsystems illustrated in FIG. 1 or FIG. 2 may include one or more computing devices that are programmed to perform the functions described herein. The computing devices may include one or more electronic storages (e.g., a set of databases accessible to one or more applications depicted in the system 100), one or more physical processors programmed with one or more computer program instructions, and/or other components. For example, the set of databases may include one or more relational databases. Alternatively, or additionally, the set of databases or other electronic storage used in this disclosure may include one or more non-relational databases.

The computing devices may include communication lines or ports to enable the exchange of information with a set of networks (e.g., a network used by the system 100) or other computing platforms via wired or wireless techniques. The network may include the internet, a mobile phone network, a mobile voice or data network (e.g., a 5G or Long-Term Evolution (LTE) network), a cable network, a public switched telephone network, or other types of communication networks or combination of communication networks. A network described by devices or systems described in this disclosure may include one or more communications paths, such as Ethernet, a satellite path, a fiber-optic path, a cable path, a path that supports internet communications (e.g., IPTV), free-space connections (e.g., for broadcast or other wireless signals), Wi-Fi, Bluetooth, near field communication, or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Each of these devices described in this disclosure may also include electronic storages. The electronic storage may include one or more non-transitory machine-readable media (e.g., storage media) that electronically stored information. The storage media of the electronic storages may include one or both of (i) system storage that is provided integrally (e.g., substantially non-removable) with servers or client computing devices, or (ii) removable storage that is removably connectable to the servers or client computing devices via port (e.g., a USB port, a firewire port, etc.) or drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storage may include one or more virtual storage resources (e.g., cloud storage, a virtual private network, and/or other virtual storage resources). An electronic storage may store software algorithms, information determined by the processors, information obtained from servers, information obtained from client computing devices, or other information that enables the functionality as described herein.

The processors may be programmed to provide information processing capabilities in the computing devices. As such, the processors may include one or more of a digital processor, an analog processor, a digital circuit designed to process information, an analog circuit designed to process information, a state machine, and/or other mechanisms for electronically processing information. In some embodiments, the processors may include a plurality of processing units. These processing units may be physically located within the same device, or the processors may represent the processing functionality of a plurality of devices operating in coordination. The processors may be programmed to execute computer program instructions to perform functions described herein of subsystems described in this disclosure or other subsystems. The processors may be programmed to execute computer program instructions by software; hardware; firmware; some combination of software, hardware, or firmware; and/or other mechanisms for configuring processing capabilities on the processors.

It should be appreciated that the description of the functionality provided by the different subsystems described herein is for illustrative purposes, and is not intended to be limiting, as any of the subsystems described in this disclosure may provide more or less functionality than is described. For example, one or more of subsystems described in this disclosure may be eliminated, and some or all of its functionality may be provided by other ones of subsystems described in this disclosure. As another example, additional subsystems may be programmed to perform some, or all of the functionality attributed herein to one of the subsystems described in this disclosure.

With respect to the components of computing devices described in this disclosure, each of these devices may receive content and data via input/output (I/O) paths. Each of these devices may also include processors and/or control circuitry to send and receive commands, requests, and other suitable data using the I/O paths. The control circuitry may comprise any suitable processing, storage, and/or I/O circuitry. Further, some or all of the computing devices described in this disclosure may include a user input interface and/or user output interface (e.g., a display) for use in receiving and displaying data. In some embodiments, a display such as a touchscreen may also act as a user input interface. It should be noted that in some embodiments, one or more devices described in this disclosure may have neither a user input interface nor displays and may instead receive and display content using another device (e.g., a dedicated display device such as a computer screen and/or a dedicated input device such as a remote control, mouse, voice input, etc.). Additionally, one or more of the devices described in this disclosure may run an application (or another suitable program) that performs one or more operations described in this disclosure.

Although the present invention has been described in detail for the purpose of illustration based on what is currently considered to be the most practical and preferred embodiments, it is to be understood that such detail is solely for that purpose and that the invention is not limited to the disclosed embodiments but, on the contrary, is intended to cover modifications and equivalent arrangements that are within the scope of the appended claims. For example, it is to be understood that the present invention contemplates that, to the extent possible, one or more features of any embodiment may be combined with one or more features of any other embodiment.

As used throughout this application, the word "may" is used in a permissive sense (i.e., meaning having the potential to), rather than a mandatory sense (i.e., meaning must). The words "include," "including," "includes," and the like mean including, but not limited to. As used throughout this application, the singular forms "a," "an," and "the" include plural referents unless the context clearly indicates otherwise. Thus, for example, reference to "an element" or "the element" includes a combination of two or more elements, notwithstanding the use of other terms and phrases for one or more elements, such as "one or more." The term "or" is non-exclusive (i.e., encompassing both "and" and "or"), unless the context clearly indicates otherwise. Terms describing conditional relationships (e.g., "in response to X, Y," "upon X, Y," "if X, Y," "when X, Y," and the like) encompass causal relationships in which the antecedent is a necessary causal condition, the antecedent is a sufficient causal condition, or the antecedent is a contributory causal condition of the consequent (e.g., "state X occurs upon condition Y obtaining" is generic to "X occurs solely upon Y" and "X occurs upon Y and Z"). Such conditional relationships are not limited to consequences that instantly follow the antecedent obtaining, as some consequences may be delayed, and in conditional statements, antecedents are connected to their consequents (e.g., the antecedent is relevant to the likelihood of the consequent occurring). Statements in which a plurality of attributes or functions are mapped to a plurality of objects (e.g., a set of processors performing steps/operations A, B, C, and D) encompass all such attributes or functions being mapped to all such objects and subsets of the attributes or functions being mapped to subsets of the attributes or functions (e.g., both/all processors each performing steps/operations A-D, and a case in which processor 1 performs step/operation A, processor 2 performs step/operation B and part of step/operation C, and processor 3 performs part of step/operation C and step/operation D), unless otherwise indicated. Further, unless otherwise indicated, statements that one value or action is "based on" another condition or value encompass both instances in which the condition or value is the sole factor and instances in which the condition or value is one factor among a plurality of factors.

Unless the context clearly indicates otherwise, statements that "each" instance of some collection has some property should not be read to exclude cases where some otherwise identical or similar members of a larger collection do not have the property (i.e., each does not necessarily mean each and every). Limitations as to the sequence of recited steps should not be read into the claims unless explicitly specified (e.g., with explicit language like "after performing X, performing Y") in contrast to statements that might be improperly argued to imply sequence limitations (e.g., "performing X on items, performing Y on the X'ed items") used for purposes of making claims more readable rather than specifying a sequence. Statements referring to "at least Z of A, B, and C," and the like (e.g., "at least Z of A, B, or C"), refer to at least Z of the listed categories (A, B, and C) and do not require at least Z units in each category. Unless the context clearly indicates otherwise, it is appreciated that throughout this specification discussions utilizing terms such as "processing," "computing," "calculating," "determining," or the like refer to actions or processes of a specific apparatus, such as a special purpose computer or a similar special purpose electronic processing/computing device. Furthermore, unless indicated otherwise, updating an item may include generating the item or modifying an existing item. Thus, updating a record may include generating a record or modifying the value of an already-generated value in a record. Additionally, as used in the specification, "a portion" refers to a part of, or the entirety of (i.e., the entire portion), a given item (e.g., data) unless the context clearly dictates otherwise.

Unless the context clearly indicates otherwise, ordinal numbers used to denote an item do not define the item's position. For example, an item that may be a first item of a set of items, even if the item is not the first item to have been added to the set of items or is otherwise indicated to be listed as the first item of an ordering of the set of items. Thus, for example, if a set of items is sorted in a sequence from "item 1," "item 2," and "item 3," the first item of a set of items may be "item 2" unless otherwise stated.

### Enumerated Embodiments

The present techniques will be better understood with reference to the following enumerated clauses:
1. A method comprising: constructing a graph indicating conversation state based on a multi-turn conversation using a language model; determining a metric based on the graph; determining a result indicating whether the metric satisfies a set of criteria; and performing a retraining operation for the language model or deploying a set of parameters for the model-based agent based on the result indicating whether the metric satisfies the set of criteria.
2. A method comprising: constructing a graph indicating conversation state based on a multi-turn conversation using a language model; determining a metric of events by traversing a path through nodes of the graph; determining a result indicating whether the metric of events satisfies a set of criteria; and performing a retraining operation for the language model based on the result indicating whether the metric of events satisfies the set of criteria.
3. A method comprising: constructing a graph indicating conversation state based on a multi-turn conversation using a language model; determining a metric of events by traversing a path through nodes of the graph; determining a result indicating whether the metric of events satisfies a set of criteria; and deploying a set of parameters for the model-based agent based on the result indicating whether the metric of events satisfies the set of criteria.
4. A method comprising: constructing a graph indicating a set of intents and a set of intent states by providing, as inputs, a set of transcripts of a set of multi-turn conversations between a user and a model-based agent to a language model; determining a metric of events by traversing a path through nodes of the graph based on the set of intent states and a set of API requests effectuated during the set of multi-turn conversations; determining a result indicating whether the metric of events satisfies a set of criteria comprising one or more thresholds; and deploying a set of parameters for the model-based agent based on the result indicating whether the metric of events satisfies the set of criteria.
5. A method comprising: generating a set of agent-generated turns during a multi-turn conversation between a user and a model-based agent by sending user-generated text provided by the user to a first language model; constructing a transition state graph indicating a set of intents and an associated set of intent states by providing, as inputs, a transcript of the multi-turn conversation trained to output intents; determining a metric of out-of-intent request events by traversing a path through nodes of the transition state graph to detect a set of intent state changes based on the set of intents, the associated set of intent states, and a set of API requests effectuated during the multi-turn conversation; determining whether the metric of out-of-intent request events satisfies a maximum violation threshold; and pushing, to a client-facing application, a set of parameters for the model-based agent based on whether the metric of out-of-intent request events satisfies the maximum violation threshold.
6. A method comprising: constructing a graph indicating a set of intents and a set of intent states by providing, as inputs, a set of transcripts of a set of multi-turn conversations between a user and a model-based agent to a language model; determining a metric of events by traversing a path through nodes of the graph based on the set of intent states and a set of API requests effectuated during at least one conversation of the set of multi-turn conversations; determining a result indicating whether the metric of events satisfies a set of criteria comprising one or more thresholds; and pushing, to a client-facing application, a set of parameters for the model-based agent based on the result indicating whether the metric of events satisfies the set of criteria.
7. The method of any of the embodiments above, wherein constructing the graph comprises: determining a first intent category associated with a first node of the graph based on a first set of intents of the first node; determining a second intent category associated with a second node of the graph based on a second set of intents of the second node; determining a pattern based on a node path of the graph from the first intent category and the second intent category; and wherein pushing the set of parameters comprises pushing the set of parameters based on the pattern.
8. The method of any of the embodiments above, further comprising: receiving, as a part of a user-generated conversational turn, user-generated text; providing the user-generated text to the model-based agent with a first computer system; and forwarding the user-generated text to a second application, wherein constructing the graph comprises constructing the graph using this second application.
9. The method of any of the embodiments above, further comprising: assigning a first intent to a first turn of the set of multi-turn conversations by updating a first node of the graph associated with the first turn; retrieving a set of intent exit criteria based on the first intent; and determining a second result indicating that the set of intent exit criteria is satisfied based on text from a second turn of the set of multi-turn conversations, wherein pushing the set of parameters comprises pushing the set of parameters based on the second result indicating that the set of intent exit criteria is satisfied.
10. The method of any of the embodiments above, wherein the result is a first result, and wherein determining the metric of events comprises: determining, for a first node of the graph, a second result indicating whether an API request is valid based on a subset of intents associated with the first node and a set of permissible API requests associated with the subset of intents; and determining the metric of events based on the second result indicating whether the API request is valid.
11. The method of any of the embodiments above, wherein the set of multi-turn conversations comprises a first turn generated by the model-based agent and a second turn generated by the model-based agent, further comprising: determine a semantic similarity score by comparing output text in a first turn and output text in the second turn; and determining a second result indicating whether the semantic similarity score satisfies a threshold, wherein pushing the set of parameters comprises pushing the set of parameters based on the second result indicating whether the semantic similarity score satisfies the threshold.
12. The method of any of the embodiments above, further comprising: retrieving a set of application-level logs associated with the model-based agent indicating API endpoint usage, rate limit-related data, or user-related data; and determining the result indicating whether the metric of events satisfies the set of criteria comprises determining whether the set of application-level logs satisfies the set of criteria.
13. The method of any of the embodiments above, wherein constructing the graph comprises: determining a first set of intents based on user interface interactions provided by a client device; and determining a second set of intents by providing the set of transcripts to an evaluation language model.
14. The method of any of the embodiments above, wherein the set of multi-turn conversations comprises a first turn and a second turn, wherein constructing the graph comprises: for the first turn, constructing a first node of the graph by assigning a first intent to the first node and an associated indication of intent entry based on a determination that the first intent was not present in a parent node of the first node; and for the second turn, constructing a second node of the graph that is downstream with respect to the first node by determining that an intent criterion of the first intent is satisfied; determining a second result indicating that the intent criterion is satisfied, wherein pushing the set of parameters comprises pushing the set of parameters based on the second result indicating that the intent criterion is satisfied.
15. The method of any of the embodiments above, wherein the language model is executed by a first instance of an application, and wherein the path is a first path, and wherein the graph is a first graph, and wherein the set of transcripts is a first set of transcripts, and wherein constructing the graph comprises using the first instance of the application to determine the set of intents, and wherein the metric of events is a first metric, and wherein the result is a first result, further comprising: constructing a second graph indicating a second set of intents by providing a second set of transcripts to the language model executing on the first instance of the application; determining a second metric of events by traversing a second path through the second graph; determining a second result indicating whether the second metric of events satisfies the set of criteria based on the set of API requests and the set of intents, wherein pushing the set of parameters comprises pushing the set of parameters based on the second result.
16. The method of any of the embodiments above, further comprising: providing, to the user, a set of hyperlinks; receiving an indication that the user has visited the set of hyperlinks; determining that a first intent of the set of intents is satisfied based on the indication, wherein pushing the set of parameters comprises receiving the indication that the first intent is satisfied.
17. The method of any of the embodiments above, wherein the set of multi-turn conversations comprises a first multi-turn conversation and a second multi-turn conversation, wherein the set of transcripts comprises a first transcript of the first multi-turn conversation and a second transcript of the second multi-turn conversation, further comprising: generating a first portion of the graph based on the first transcript; and generating a second portion of the graph based on the second transcript, wherein a state change indicates a transition between the first portion and the second portion; and determining the metric of events based on the state change.
18. The method of any of the embodiments above, further comprising: receiving, as a part of a user-generated conversational turn, a set of user-generated text; determining a subset of intents based on the set of user-generated text; retrieving context data from a set of records based on the set of user-generated text; and determining the metric of events based on a comparison between the set of records and a predicted set of records associated with the subset of intents.
19. The method of any of the embodiments above, further comprising updating a first subset of parameters of the set of parameters in lieu of a second subset of parameters of the set of parameters based on a score category associated with the metric.
20. The method of any of the embodiments above, wherein constructing the graph comprises: determining a first intent category associated with a first node of the graph based on a first set of intents of the first node; determining a second intent category associated with a second node of the graph based on a second set of intents of the second node; determining a pattern based on a node path of the graph from the first intent category and the second intent category; and wherein deploying the set of parameters comprises deploying the set of parameters based on the pattern.
21. The method of any of the embodiments above, further comprising: receiving, as a part of a user-generated conversational turn, user-generated text; providing the user-generated text to the model-based agent with a first computer system; and forwarding the user-generated text to a second application, wherein constructing the graph comprises constructing the graph using this second application.
22. The method of any of the embodiments above, further comprising: assigning a first intent to a first turn of the set of multi-turn conversations by updating a first node of the graph associated with the first turn; retrieving a set of intent exit criteria based on the first intent; and determining a second result indicating that the set of intent exit criteria is satisfied based on text from a second turn of the set of multi-turn conversations, wherein deploying the set of parameters comprises deploying the set of parameters based on the second result indicating that the set of intent exit criteria is satisfied.
23. The method of any of the embodiments above, further comprising: retrieving a set of application-level logs associated with the model-based agent indicating API endpoint usage, rate limit-related data, or user-related data; and determining the result indicating whether the metric of events satisfies the set of criteria comprises determining whether the set of application-level logs satisfies the set of criteria.
24. A tangible, non-transitory, machine-readable medium storing instructions that, when executed by a data processing apparatus, cause the data processing apparatus to perform operations comprising those of any of embodiments 1-23.
25. A system comprising one or more processors; and memory storing instructions that, when executed by the processors, cause the processors to effectuate operations comprising those of any of embodiments 1-23.
26. A system comprising means for performing any of embodiments 1-23.

## Claims

1. A system for establishing communication guardrails for multi-turn conversations by tracking model-derived conversation states across nodes, comprising:
one or more processors;
one or more machine-readable media storing program instructions that, when executed by the one or more processors, performs operations comprising:
generating a set of agent-generated turns during a multi-turn conversation between a user and a model-based agent by sending user-generated text provided by the user to a first language model;
constructing a transition state graph indicating a set of intents and an associated set of intent states by providing, as inputs, a transcript of the multi-turn conversation trained to output intents;
determining a metric of out-of-intent request events by traversing a path through nodes of the transition state graph to detect a set of intent state changes based on the set of intents, the associated set of intent states, and a set of API requests effectuated during the multi-turn conversation;
determining whether the metric of out-of-intent request events satisfies a maximum violation threshold; and
pushing, to a client-facing application, a set of parameters for the model-based agent based on whether the metric of out-of-intent request events satisfies the maximum violation threshold.

2. A method comprising:
constructing a graph indicating a set of intents and a set of intent states by providing, as inputs, a set of transcripts of a set of multi-turn conversations between a user and a model-based agent to a language model;
determining a metric of events by traversing a path through nodes of the graph based on the set of intent states and a set of API requests effectuated during at least one conversation of the set of multi-turn conversations;
determining a result indicating whether the metric of events satisfies a set of criteria comprising one or more thresholds; and
pushing, to a client-facing application, a set of parameters for the model-based agent based on the result indicating whether the metric of events satisfies the set of criteria.

3. The method of claim 2, wherein constructing the graph comprises one of:
(a) determining a first intent category associated with a first node of the graph based on a first set of intents of the first node; determining a second intent category associated with a second node of the graph based on a second set of intents of the second node; determining a pattern based on a node path of the graph from the first intent category and the second intent category; and wherein pushing the set of parameters comprises pushing the set of parameters based on the pattern; or
(b) determining a first set of intents based on user interface interactions provided by a client device; and determining a second set of intents by providing the set of transcripts to an evaluation language model

4. The method of claim 2 or 3, further comprising one or both of:
(a) receiving, as a part of a user-generated conversational turn, user-generated text; providing the user-generated text to the model-based agent with a first computer system; and forwarding the user-generated text to a second application, wherein constructing the graph comprises constructing the graph using this second application; and
(b) assigning a first intent to a first turn of the set of multi-turn conversations by updating a first node of the graph associated with the first turn; retrieving a set of intent exit criteria based on the first intent; and determining a second result indicating that the set of intent exit criteria is satisfied based on text from a second turn of the set of multi-turn conversations, wherein pushing the set of parameters comprises pushing the set of parameters based on the second result indicating that the set of intent exit criteria is satisfied.

5. The method of any one of claims 2 to 4, wherein the result is a first result, and wherein determining the metric of events comprises:
determining, for a first node of the graph, a second result indicating whether an API request is valid based on a subset of intents associated with the first node and a set of permissible API requests associated with the subset of intents; and
determining the metric of events based on the second result indicating whether the API request is valid.

6. The method of any one of claims 2 to 5, further comprising:
retrieving a set of application-level logs associated with the model-based agent indicating API endpoint usage, rate limit-related data, or user-related data; and
determining the result indicating whether the metric of events satisfies the set of criteria comprises determining whether the set of application-level logs satisfies the set of criteria.

7. The method of any one of claims 2 to 6, wherein one of:
(a) the set of multi-turn conversations comprises a first turn and a second turn, and constructing the graph comprises: for the first turn, constructing a first node of the graph by assigning a first intent to the first node and an associated indication of intent entry based on a determination that the first intent was not present in a parent node of the first node; and for the second turn, constructing a second node of the graph that is downstream with respect to the first node by determining that an intent criterion of the first intent is satisfied; determining a second result indicating that the intent criterion is satisfied, wherein pushing the set of parameters comprises pushing the set of parameters based on the second result indicating that the intent criterion is satisfied; or
(b) the set of multi-turn conversations comprises a first multi-turn conversation and a second multi-turn conversation, the set of transcripts comprises a first transcript of the first multi-turn conversation and a second transcript of the second multi-turn conversation, and the method further comprises: generating a first portion of the graph based on the first transcript; and generating a second portion of the graph based on the second transcript, wherein a state change indicates a transition between the first portion and the second portion; and determining the metric of events based on the state change; or
(c) the set of multi-turn conversations comprises a first turn generated by the model-based agent and a second turn generated by the model-based agent, and the method further comprises: determine a semantic similarity score by comparing output text in a first turn and output text in the second turn; and determining a second result indicating whether the semantic similarity score satisfies a threshold, wherein pushing the set of parameters comprises pushing the set of parameters based on the second result indicating whether the semantic similarity score satisfies the threshold.

8. The method of any one of claims 2 to 7, wherein the language model is executed by a first instance of an application, and wherein the path is a first path, and wherein the graph is a first graph, and wherein the set of transcripts is a first set of transcripts, and wherein constructing the graph comprises using the first instance of the application to determine the set of intents, and wherein the metric of events is a first metric, and wherein the result is a first result, further comprising:
constructing a second graph indicating a second set of intents by providing a second set of transcripts to the language model executing on the first instance of the application;
determining a second metric of events by traversing a second path through the second graph;
determining a second result indicating whether the second metric of events satisfies the set of criteria based on the set of API requests and the set of intents, wherein pushing the set of parameters comprises pushing the set of parameters based on the second result.

9. The method of any one of claims 2 to 8, further comprising one or both of:
(a) providing, to the user, a set of hyperlinks; receiving an indication that the user has visited the set of hyperlinks; and determining that a first intent of the set of intents is satisfied based on the indication, wherein pushing the set of parameters comprises receiving the indication that the first intent is satisfied; and
(b) receiving, as a part of a user-generated conversational turn, a set of user-generated text; determining a subset of intents based on the set of user-generated text; retrieving context data from a set of records based on the set of user-generated text; and determining the metric of events based on a comparison between the set of records and a predicted set of records associated with the subset of intents.

10. The method of any one of claims 2 to 9, further comprising updating a first subset of parameters of the set of parameters in lieu of a second subset of parameters of the set of parameters based on a score category associated with the metric.

11. One or more non-transitory machine-readable media storing program instructions that, when executed by one or more processors, causes the one or more processors to perform operations comprising:
constructing a graph indicating a set of intents and a set of intent states by providing, as inputs, a set of transcripts of a set of multi-turn conversations between a user and a model-based agent to a language model;
determining a metric of events by traversing a path through nodes of the graph based on the set of intent states and a set of API requests effectuated during the set of multi-turn conversations;
determining a result indicating whether the metric of events satisfies a set of criteria comprising one or more thresholds; and
deploying a set of parameters for the model-based agent based on the result indicating whether the metric of events satisfies the set of criteria.

12. The one or more machine-readable media of claim 11, wherein constructing the graph comprises:
determining a first intent category associated with a first node of the graph based on a first set of intents of the first node;
determining a second intent category associated with a second node of the graph based on a second set of intents of the second node;
determining a pattern based on a node path of the graph from the first intent category and the second intent category; and
wherein deploying the set of parameters comprises deploying the set of parameters based on the pattern.

13. The one or more machine-readable media of claim 11 or 12, the operations further comprising:
receiving, as a part of a user-generated conversational turn, user-generated text;
providing the user-generated text to the model-based agent with a first computer system; and
forwarding the user-generated text to a second application, wherein constructing the graph comprises constructing the graph using this second application.

14. The one or more machine-readable media of any one of claims 11 to 13, the operations further comprising:
assigning a first intent to a first turn of the set of multi-turn conversations by updating a first node of the graph associated with the first turn;
retrieving a set of intent exit criteria based on the first intent; and
determining a second result indicating that the set of intent exit criteria is satisfied based on text from a second turn of the set of multi-turn conversations, wherein deploying the set of parameters comprises deploying the set of parameters based on the second result indicating that the set of intent exit criteria is satisfied.

15. The one or more machine-readable media of any one of claims 11 to 14, further comprising:
retrieving a set of application-level logs associated with the model-based agent indicating API endpoint usage, rate limit-related data, or user-related data; and
determining the result indicating whether the metric of events satisfies the set of criteria comprises determining whether the set of application-level logs satisfies the set of criteria.
